(19) Europäisches Patentamt
European Patent Office
Office européen des brevets

(11) **EP 1 495 633 B1**

(12) **EUROPÄISCHE PATENTSCHRIFT**

(45) Veröffentlichungstag und Bekanntmachung des Hinweises auf die Patenterteilung:
**27.02.2008 Patentblatt 2008/09**

(21) Anmeldenummer: **03720263.7**

(22) Anmeldetag: **07.04.2003**

(51) Int Cl.:
***H04N 1/60*** *(2006.01)*

(86) Internationale Anmeldenummer:
**PCT/DE2003/001136**

(87) Internationale Veröffentlichungsnummer:
**WO 2003/088642 (23.10.2003 Gazette 2003/43)**

(54) **DRUCKVORRICHTUNG UND VERFAHREN ZUM BETREIBEN EINER DRUCKVORRICHTUNG**

PRINTING DEVICE AND METHOD FOR OPERATING A PRINTING DEVICE

DISPOSITIF D'IMPRESSION ET PROCEDE POUR FAIRE FONCTIONNER UN DISPOSITIF D'IMPRESSION

(84) Benannte Vertragsstaaten:
**AT BE BG CH CY CZ DE DK EE ES FI FR GB GR HU IE IT LI LU MC NL PT RO SE SI SK TR**

(30) Priorität: **15.04.2002 DE 10216669**

(43) Veröffentlichungstag der Anmeldung:
**12.01.2005 Patentblatt 2005/02**

(73) Patentinhaber: **Best GmbH**
**40880 Ratingen (DE)**

(72) Erfinder: **SCHUPPAN, Holger**
**46242 Bottrop (DE)**

(74) Vertreter: **Viering, Jentschura & Partner**
**Centroallee 263**
**46047 Oberhausen (DE)**

(56) Entgegenhaltungen:
**EP-A- 0 398 502     EP-A- 0 854 638**
**EP-A- 1 178 670**

**Beschreibung**

Die Erfindung betrifft eine Druckvorrichtung und ein Verfahren zum Betreiben einer Druckvorrichtung. Insbesondere betrifft die Erfindung eine Druckvorrichtung bzw. ein Verfahren zum Betreiben einer Druckvorrichtung unter Berücksichtigung einer Farbveränderung in Abhängigkeit von der nach dem Druck verstrichenen Zeit, mittels derer ein verbindliches Messen von Farbwerten der Druckvorrichtung durchführbar ist.

Beim Anfertigen von Ausdrucken auf Druckvorrichtungen, insbesondere Tintenstrahldruckern, ist in vielen Fällen ein stabiles, vorhersagbares und kontrollierbares Farbverhalten sehr wichtig. Dies ist insbesondere beim Einsatz in der Simulation von Druckmaschinen sowie bei der Wiedergabe von Kunstwerken ("Fine Art Reproduction") oder Photographien der Fall.

Es ist bekannt, die Anpassung des Farbverhaltens über ein sogenanntes Farbmanagement ("Color Management") vorzunehmen. Ein Beispiel hierfür bildet die vom ICC (="**I**nternational **C**olor **C**onsortium") in der Druckindustrie etablierte Verwendung von sogenannten ICC-Farbprofilen. Hierbei wird das Farbverhalten des Druckers auf einem bestimmten Material durch Ausdrucken einer bestimmten Anzahl von Meßfeldern mit unterschiedlichen Farbmischungsverhältnissen der Druckerfarben beschrieben. Diese Meßfelder werden zur Bestimmung des Farbverhaltens des Druckers spektralphotometrisch vermessen. Die dabei gewonnenen Messwerte werden dann in einem sogenannten Farbprofil abgelegt, welches den Farbeindruck des jeweiligen Meßfeldes wiedergibt. Mit Hilfe dieses Farbprofils ist es einer Farbmanagementsoftware möglich, diejenige Menge der einzelnen Druckerfarben zu bestimmen, deren Mischung auf dem gemessenen Material einen gewünschten Farbeindruck ergibt. Entsprechend diesen Mischungsverhältnissen werden dann die einzelnen vom Tintenstrahldrucker verwendeten Farben auf das zu bedruckende Material aufgebracht.

Hierbei tritt jedoch das Problem auf, daß die beim Druck mit Tintenstrahldruckern verwendeten Farben aufgrund ihrer chemischen und mikrostrukturellen Eigenschaften mit dem bedruckten Material sowie auch miteinander reagieren. Dies hat auch eine Veränderung der Farbeigenschaften zur Folge, die unmittelbar nach dem Ausdruck am stärksten ausgeprägt ist. Wie durch Langzeittests nachgewiesen wurde, ist eine signifikante Veränderung der Farbeigenschaften aber auch noch über Tage und sogar Wochen hinweg vorhanden.

Die Abweichung der gemessenen Farbprofile vom endgültigen Farbeindruck ist insbesondere während der ersten halben Stunde keineswegs vernachlässigbar, weshalb es von Herstellern von Farbmanagementsystemen empfohlen wird, mindestens 30 Minuten zu warten, bevor die Messung der o.g. Meßfelder erfolgt.

Ein weiteres Problem ist, dass die oben beschriebene Farbschwankung weder linear ist noch anderweitig in einer bestimmten Richtung verläuft. Es kann also beispielsweise der Fall auftreten, daß vom Zeitpunkt des Ausdrucks an die Abweichung der Farbwerte vom endgültigen Ergebnis zunächst für eine bestimmte Zeitspanne größer wird, und danach langsam wieder abnimmt, bis sich die Farbwerte schließlich weitgehend stabilisiert haben. Infolgedessen werden die Ausdrucke zunächst eine gewisse Zeit aufbewahrt, bevor sie vermessen werden können.

Dieses Problem ist besonders gravierend bei Anwendungen, bei denen durch die Farbschwankungen beim Trocknen eine verlässliche Messung geradezu unmöglich ist. Dazu zählt beispielsweise die Farbmessung direkt während des Druckens, was beispielsweise für eine Online-Überwachung des Druckprozesses wünschenswert ist.

Jede Anordnung eines Farbmessgeräts direkt am Drucker kann nur eine relative Messung durchführen. Das Ergebnis dieser relativen Messung weicht meist stark von dem Ergebnis einer eine bestimmte Zeitspanne nach dem Druckprozeß in dem gleichen Bereich durchgeführten Messung ab, so daß zuverlässige Aussagen anhand von Meßergebnissen, die während oder unmittelbar nach dem Drucken gewonnen wurden, problematisch sind.

Das Problem mangelnder Übereinstimmung zwischen Farbmessergebnissen ist in folgenden Fällen besonders gravierend:

a) wenn es sich um voneinander verschiedene Kombinationen aus Drucker, Tinte und Material handelt, z.B. durch unterschiedliche Hersteller oder unterschiedliche Technologien (z.B. "Piezo-" vs. "Bubblejet");

b) wenn durch die konstruktive Anordnung des Messgeräts im oder am Drucker verschiedene Zeitspannen zwischen Druck und Messung verstreichen;

c) wenn infolge der Abhängigkeit vom Inhalt der Druckdaten ein Unterschied im Zeitpunkt der Messung nach dem Druck begründet wird (hohe/niedrige Auflösung, langsamer/schneller Druckmodus, unterschiedliche Abmessungen des Bildes und dadurch unterschiedliche Druckzeit). Dies ist beispielsweise der Fall, wenn das Messgerät zwar am Drucker, aber nicht am Druckkopf selbst angeordnet ist.

Das europäische Patent EP 1 178 670 betrifft die Kalibrierung einer Vorrichtung zur zeilenweisen Bildabtastung (Scanner), wobei ein vorbereiteter Kalibrierungsstreifen abgetastet wird und die Abtastwerte mit Sollwerten verglichen werden. Neben aktuellen Betriebsbedingungen (z.B. Betriebstemperatur) werden Ergebnisse von Kalibrierungen zu anderen (früheren) Zeitpunkten zur Entscheidung darüber herangezogen, ob eine (Teil-)Kalibrierung durchzuführen ist.

Die Abtastwerte eines Originaldokuments werden dann entsprechend den Ergebnissen der Kalibrierung korrigiert. Mit diesem Verfahren ist der Einfluss von Temperatur, Alterung und anderen Einflussgrößen auf das Abtastergebnis kompensierbar. Die Patentschrift offenbart aber kein Verfahren zur Elimination störender Einflüsse bei der Anpassung des Farbverhaltens.

Die europäische Patentschrift EP 0 398 502 zeigt unter anderem eine kalibrierfähige Druckvorrichtung, wobei das zugeordnete Verfahren einen anfänglichen Kalibrierungsschritt beinhaltet, der anhand eines Test-Bildmusters mit einer Mehrzahl von Messfeldern die abgetastet werden, aus den Messergebnissen ein Farbprofil erzeugt und auf Basis dieses Farbprofils die Farbmischungsverhältnisse der Druckvorrichtung einstellt. In einem weiteren Kalibrierungsschritt wird ein vereinfachtes Testmuster auf der Druckvorrichtung ausgedruckt, abgetastet, aus den Abtastwerten wird ein Farbprofil erzeugt, das mit den dem Ausdruck zugrundeliegenden Testbilddaten verglichen wird, und die Bilddaten für das auszudruckende Bild entsprechend korrigiert. Die Patentschrift offenbart kein Verfahren zur Elimination störender Einflüsse bei der Anpassung des Farbverhaltens, die zum Beispiel durch die oben genannten Trocknungsvorgänge entstehen.

Das europäische Patent EP 0 854 638 betrifft ein Verfahren zum wiederholten Kalibrieren einer Druckvorrichtung während eines Benutzungszeitraumes. Die wiederholte Kalibrierung wird ähnlich dem Verfahren der EPO 398 502 mit einem vereinfachten Testmuster durchgeführt, das von der Druckvorrichtung ausgedruckt und wieder eingelesen wird. Ein Verfahren zur Beseitigung störender Einflüsse bei der Anpassung des Farbverhaltens, die zum Beispiel durch die oben genannten Trocknungsvorgänge entstehen, wird allerdings nicht offenbart.

Aufgabe der vorliegenden Erfindung ist es daher, ein Verfahren zum Betreiben einer Druckvorrichtung sowie eine Druckvorrichtung zu schaffen, bei dem die oben genannten störenden Einflüsse bei der Anpassung des Farbverhaltens weitestgehend eliminiert werden.

Diese Aufgabe wird gemäß den Merkmalen der unabhängigen Ansprüche 1 und 10 gelöst.

Hierzu weist ein Verfahren zum Betreiben einer Druckvorrichtung die folgenden Schritte auf:

- Ausdrucken eines Kalibrationsausdrucks mittels der Druckvorrichtung, wobei der Kalibrationsausdruck eine Mehrzahl von Meßfeldern mit unterschiedlichen Farbmischungsverhältnissen aufweist;
- spektralphotometrisches Vermessen der Meßfelder unter Erzeugen eines Farbprofils, wobei das spektralphotometrische Vermessen der Meßfelder zu einer Mehrzahl von Meßzeitpunkten unter Erzeugen eines um eine Beschreibung des zeitlichen Verhaltens erweiterten Farbprofils durchgeführt wird, welches eine Mehrzahl von jeweils einem Meßzeitpunkt zugeordneten Farbprofilen enthält; und
- Einstellen von Farbmischungsverhältnissen der Druckvorrichtung auf Basis des um eine Beschreibung des zeitlichen Verhaltens erweiterten Farbprofils.

Durch Messung der Farbwerte in regelmäßigen zeitlichen Abständen nach dem Ausdruck wird das farbliche Zeitverhalten charakterisiert und diese Charakteristik in geeigneter Weise dem "normalen" Farbprofil hinzugefügt. Auf diese Weise wird es möglich, aus einer Farbmessung und der Kenntnis der Zeitdifferenz zwischen Ausdruck und Messung die Farbwerte zu einem beliebigen anderen Zeitpunkt zu berechnen. Praktischerweise sollte dieser andere Zeitpunkt so weit nach dem Ausdruck liegen, dass es keine nennenswerten Farbänderungen mehr gibt, die Farbe also stabil ist.

Auf diese Weise wird es erstmalig möglich, Messergebnisse miteinander zu vergleichen, die zu verschiedenen Zeiten nach dem Ausdruck gemessen wurden und/oder mit verschiedenen. Kombinationen aus Drucker, Farbe und Material erstellt wurden und vor Stabilisierung der Farbe gemessen wurden. Dies ist möglich, indem mit Hilfe der Zeitcharakteristik alle Messwerte auf eine Zeit umgerechnet werden, zu der sich die Farbwerte stabilisiert haben. Insbesondere wird es daher mittels des erfindungsgemäßen Verfahrens auch möglich, bei einer Online-Überwachung eines Druckprozesses zuverlässige Ergebnisse zu erzielen.

Gemäß einer bevorzugten Ausführungsform werden die Meßzeitpunkte der Mehrzahl von Meßzeitpunkten, d.h. deren zeitliche Abstände, so gewählt, daß der Zeitabstand zwischen aufeinanderfolgenden Meßzeitpunkten mit dem zeitlichen Abstand zu dem Ausdrucken des Kalibrationsausdrucks zunimmt. Bevorzugt wird die Mehrzahl von Meßzeitpunkten so gewählt, daß der Zeitabstand zwischen aufeinanderfolgenden Meßzeitpunkten eine logarithmische Abhängigkeit von dem zeitlichen Abstand zu dem Ausdrucken des Kalibrationsausdrucks aufweist, vorzugsweise gemäß der natürlichen Logarithmusfunktion ("logarithmus naturalis" = In). Hierdurch wird zum einen eine möglichst hohe Genauigkeit während der Anfangszeitspanne, in der die gemessenen Farbprofile zeitlich relativ stark variieren, gewährleistet. Zum anderen wird durch eine relativ geringe Anzahl von Messungen in größerem Zeitabstand vom Kalibrationsausdruck gewährleistet, daß nur ein möglichst geringer Speicherplatz für die Gesamtzahl von ausgemessenen Farbprofilen benötigt wird.

Bevorzugt weist das um eine Beschreibung des zeitlichen Verhaltens erweiterte Farbprofil die zu den einzelnen Meßzeitpunkten erzeugten Farbprofile jeweils mit einem zeitlichen Index auf, der um so größer ist, je kürzer der zeitliche Abstand zu dem Ausdrucken des Kalibrationsausdrucks ist.

Gemäß einer weiteren bevorzugten Ausführungsform werden vor dem Einstellen der Farbmischungsverhältnisse anhand der den einzelnen Meßzeitpunkten zugeordneten Farbprofile des um eine Beschreibung des zeitlichen Verhaltens erweiterten Farbprofils weitere Farbprofile zu anderen als den tatsächlich gemessenen Zeitpunkten durch Extrapolation und/oder Interpolation bestimmt. Auf diese Weise lassen sich künftige Farbwerte eines Ausdrucks; d.h. der durch den Ausdruck hervorgerufene Farbeindruck in Abhängigkeit von der Zeit vorhersagen.

Gemäß einer weiteren bevorzugten Ausführungsform werden Farbmischungsverhältnisse der Druckvorrichtung anhand des erweiterten Farbprofils so eingestellt, daß nach Ablauf einer bestimmten Zeitspanne vorbestimmte Farbwerte des Ausdrucks erhalten werden. Auf dieser Weise kann ein optimaler Ausdruck unter Berücksichtigung der oben erläuterten zeitlichen Veränderung des Farbeindruckes erzeugt werden.

Gemäß einer weiteren bevorzugten Ausführungsform wird durch Messung eines Farbprofils eines Ausdrucks und Berechnung des zugehörigen Farbwertes anhand des erweiterten Farbprofils das Alter des Ausdrucks bestimmt .

Als Druckvorrichtung wird vorzugsweise ein Farbtintenstrahldrucker gewählt.

Bei einer Druckvorrichtung gemäß der vorliegenden Erfindung sind Farbmischungsverhältnisse der Druckvorrichtung mittels eines Farbprofils einstellbar, welches mittels spektralphotometrischem Vermessen von Meßfeldern eines eine Mehrzahl von Meßfeldern mit unterschiedlichen Farbmischungsverhältnissen aufweisenden Kalibrationsausdruckes erzeugt ist, wobei die Mittel zum spektralphotometrischen Vermessen so ausgelegt sind, daß das spektralphotometrische Vermessen der Meßfelder zu einer Mehrzahl von Meßzeitpunkten unter Erzeugen eines um eine Beschreibung des zeitlichen Verhaltens erweiterten Farbprofils durchführbar ist, welches eine Mehrzahl von jeweils einem Meßzeitpunkt zugeordneten Farbprofilen enthält; und wobei Farbmischungsverhältnisse der Druckvorrichtung auf Basis des um eine Beschreibung des zeitlichen Verhaltens erweiterten Farbprofils einstellbar sind.

Weitere Ausgestaltungen der Erfindung sind der Beschreibung und den Unteransprüchen zu entnehmen.

Die Erfindung wird nachstehend anhand eines in den beigefügten Abbildungen dargestellten Ausführungsbeispiels näher erläutert.

Es zeigen:

Fig. 1 eine graphische Darstellung von Meßzeitpunkten $T_n$ aufeinanderfolgender Messungen n (n = 1,...10) von Farbprofilen zur Erzeugung eines erweiterten Farbprofils gemäß einem bevorzugten Ausführungsbeispiel des erfindungsgemäßen Verfahrens in einfach-logarithmischer Auftragung (Fig. 1a) bzw. eine tabellarische Auflistung dieser Meßzeitpunkte $T_n$ (Fig.1b), jeweils für $T_n=15 \cdot e^{n-1}$, n = 1,...10; und

Fig. 2 die Meßzeitpunkte $T_n$ aufeinanderfolgender Messungen n von Farbprofilen aus Fig. 1 in linearer Auftragung.

Zu Beginn des erfindungsgemäßen Verfahrens wird in bekannter Weise ein Kalibrationsausdruck mittels eines Druckers ausgedruckt, wobei der Kalibrationsausdruck eine Mehrzahl von Meßfeldern mit unterschiedlichen Farbmischungsverhältnissen aufweist. Das Verfahren eignet sich besonders zum verbindlichen Messen von Farbwerten an Farbtintenstrahldruckern, es kann jedoch beispielsweise auch für Laserdrucker eingesetzt werden.

In einem nächsten Schritt werden die einzelnen Meßfelder des Kalibrationsausdruckes spektralphotometrisch vermessen, wobei ein Farbprofil erzeugt wird, welches zu jedem Farbmischungsverhältnis den erzeugten Farbeindruck in Form eines Spektralwertes enthält. Die Mischungsverhältnisse werden vorzugsweise auf Basis der sogenannten vier Prozessfarben Cyan, Magenta, Gelb und Schwarz angegeben. Es können jedoch auch Mischungsverhältnisse auf Basis von mehr oder weniger Farben, insbesondere auch nur Schwarz und Weiß, verwendet werden.

Das Farbprofil kann insbesondere als ICC-Farbprofil erstellt werden, welches im wesentlichen zwei Tabellen aufweist. In einer ersten Tabelle des ICC-Farbprofils wird zu jedem der in den einzelnen Meßfeldern vorliegenden Farbmischungsverhältnisse CMYK der zugehörige Farbwert im Lab-Farbraum Lab = Lab(CMYK) angegeben. Eine zweite Tabelle gibt auf Basis von vorbestimmten Stützpunkten der mathematischen Umkehrfunktion CMYK = CMYK (Lab) für jeden Farbwert Lab das zum Erzeugen dieses Farbwertes benötigte Farbmischungsverhältnis CMYK an.

Das spektralphotometrische Vermessen der Meßfelder wird mehrmalig zu in vorbestimmten Zeitabständen liegenden Meßzeitpunkten durchgeführt. Hierbei wird zu jedem Meßzeitpunkt jeweils ein diesem Meßzeitpunkt zugeordnetes Farbprofil erzeugt.

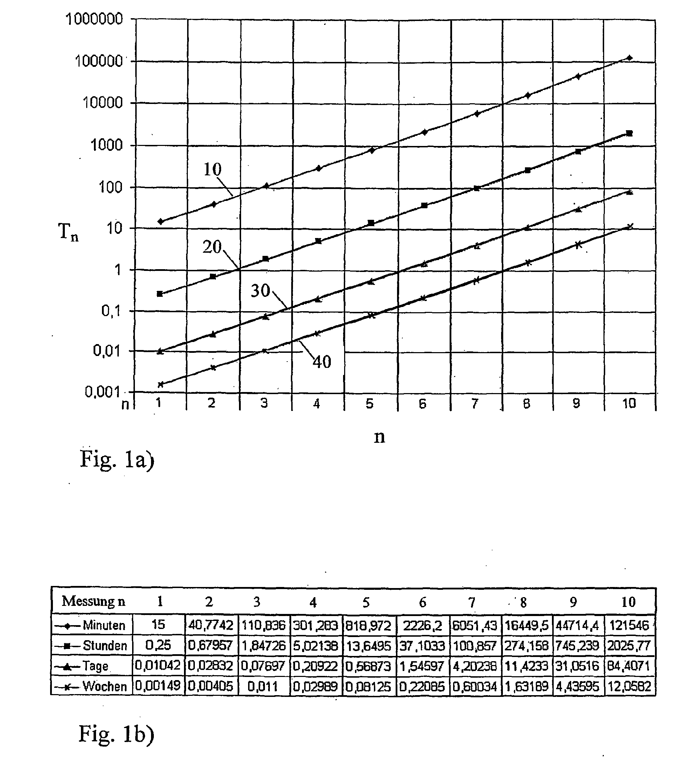

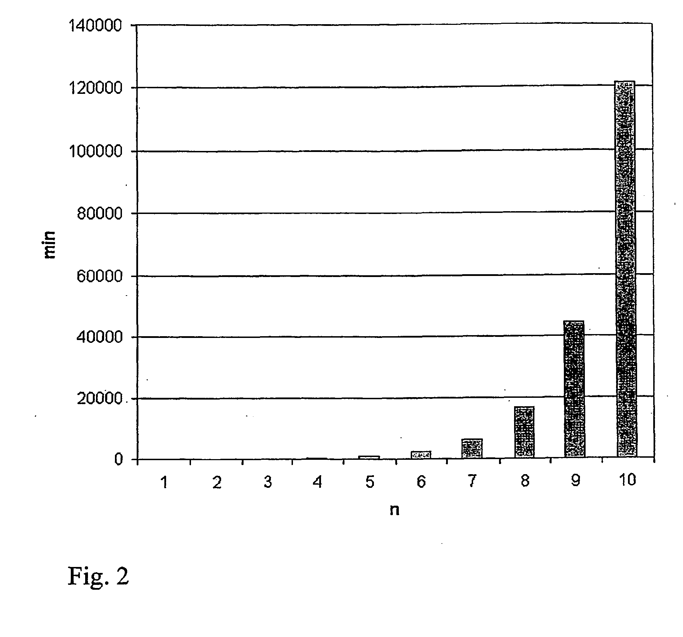

Gemäß dem in Fig. 1 und Fig. 2 dargestellten Ausführungsbeispiel werden diese Meßzeitpunkte so gewählt, dass die Zeitabstände zwischen den Meßzeitpunkten in Abhängigkeit von dem zeitlichen Abstand zu dem Zeitpunkt, zu dem der Kalibrationsausdruck des Druckers fertiggestellt wurde, logarithmisch zunehmen, und zwar vorzugsweise gemäß der Funktion

$$T_n = k \cdot e^{n-1}, \quad (n = 1,\ldots,N; \; k=\text{const.}) \qquad (1)$$

wobei $T_n$ die Zeitspanne (in Minuten) bis zur n-ten Messung, N die Gesamtzahl der zur Erzeugung des erweiterten Farbprofils durchgeführten Messungen und k einen linearen Korrekturfaktor bezeichnet.

Um eine geeignete Relation zwischen der erzeugten Dateigröße für das erweiterte Farbprofil einerseits und der Anzahl der für eine der späteren Interpolation oder Extrapolation zugrundegelegten Meßwerte zu erhalten, sollte für die Gesamtzahl N an Meßpunkten vorzugsweise ein Wert etwa in der Größenordnung zehn gewählt werden.

Legt man ferner die Zeitspanne $T_n$ bis zur zeitlich letzten Messung (n = 10) auf einen geeigneten Wert von $T_{10}$= 12 Wochen = 120960 Minuten fest (eine solche Zeitspanne entspricht etwa der üblicherweise geforderten Mindesthaltbarkeitsdauer für ein Farbproof), so erhält man gemäß der Darstellung in Fig. 1a bei logarithmischer Auftragung von $T_n$ gegen n (mit n = 1,...10) eine lineare Darstellung, wenn der lineare Korrekturfaktor k = 120960 / $e^{10-1} \approx 15$ gewählt wird, so daß sich die Beziehung $T_n$ =15· $e^{n-1}$ (n= 1, ... ,N; k= const .) ergibt.

Hierbei geben gemäß Fig. 1a die in der einfachlogarithmischen Auftragung (d.h. mit logarithmischer Einteilung der $T_n$-Achse) gezeigten Graphen die jeweilige Zeitspanne $T_n$ in Minuten (Graph 10), Stunden (Graph 20), Tagen (Graph 30) bzw. Wochen (Graph 40) an. Die zugehörigen Werte $T_n$ für die einzelnen Messungen n = 1,...,10 sind in Fig. 1b tabellarisch aufgelistet.

Wie aus der in Fig. 2 gewählten Auftragung, ebenfalls für die o.g. Formel, ersichtlich ist, steigen die Zeitspannen zwischen den einzelnen Messungen mit zunehmendem zeitlichen Abstand zu der zeitlich ersten Messung (n= 1), d.h. dem Startzeitpunkt, zu dem der Kalibrationsausdruck fertiggestellt wurde, an.

Infolge der Einteilung der Zeitskala für die zu setzenden Meßpunkte der Farbprofile gemäß Gleichung (1), also gemäß der natürlichen Logarithmusfunktion, wird dem Umstand Rechnung getragen, dass die farbliche Veränderung der verwendeten Tinten auf dem bedruckten Material direkt nach dem Kalibrationsausdruck am meisten ausgeprägt ist und sich anschließend verlangsamt. Mittels einer logarithmischen Anordnung der einzelnen Meßzeitpunkte wird zum einen in der direkt auf die Fertigstellung des Kalibrationsausdruckes folgenden Zeitspannung eine größere Genauigkeit gewährleistet, wobei gleichzeitig durch Auswahl größerer Zeitabstände zwischen den Meßzeitpunkten im zeitlichen Bereich größerer Stabilität der notwendige Speicherplatz minimiert wird.

Alternativ, jedoch weniger bevorzugt, kann anstelle der obigen Einteilung der Zeitskala für die einzelnen Messungen der Farbprofile auch eine andere nichtlineare Einteilung der Zeitskala für die zu setzenden Meßpunkte gewählt werden. Grundsätzlich möglich, jedoch infolge des steileren Anstiegs der Funktion weniger geeignet, ist auch eine Einteilung der Zeitskala gemäß dem dekadischen Logarithmus $T_n$ =$k$·$10^{n-1}$ (mit n = 1,2,...,N), wobei dann eine Messung des jeweiligen Farbprofils nach 1 min (n = 1), 10 min (n = 2), 100 min (n = 3), 1000 min (n = 4) etc. erfolgen würde.

Nach Fertigstellung der Messungen der einzelnen Farbprofile zu den jeweiligen Meßzeitpunkten $T_n$ (mit n = 1,...10) werden die zu jedem Meßzeitpunkt erzeugten Farbprofile zu einem um eine Beschreibung des zeitlichen Verhaltens erweiterten Farbprofil zusammengefasst, welches die seit dem Fertigstellen des Kalibrationsausdruckes vergangene Zeitspanne als weitere Dimension in einem zusätzlichen Adressbereich enthält.

Vorzugsweise werden hierbei die einzelnen Farbprofile mit einem zeitlichen Index abgespeichert, der umso größer ist, je kürzer der zeitliche Abstand von dem Fertigstellen des Kalibrationsausdruckes des Druckers ist. Die Tabellensektion mit dem größten zeitlichen Index entspricht also der ersten, nach Fertigstellung des Kalibrationsausdrucks angefertigten spektralphotometrischen Messung, während die zeitlich letzte Messung.mit dem zeitlichen Index Null abgespeichert wird.

Diese Form des erweiterten Farbprofils hat den Vorteil, dass das erweiterte Farbprofil auch mittels eines herkömmlichen, zur Interpretation von ICC-Profilen ohne Zeitskala entwickelten Verfahrensablaufs verarbeitet werden kann. In diesem Falle werden vorzugsweise die Werte des erweiterten Farbprofils verwendet, die mit dem zeitlichen Index Null abgespeichert wurden, da diese Werte in der besten Näherung der Zeit entsprechen, zu der die Farbwerte weitgehend konstant sind.

Nach Fertigstellung des erweiterten Farbprofils wird dieses zur Durchführung eines Farbmanagements verwendet, d.h. das Einstellen der Farbmischungsverhältnisse des Druckers erfolgt auf Basis des um eine Beschreibung des zeitlichen Verhaltens erweiterten Farbprofils.

Mittels des erweiterten Farbprofils können in einfacher Weise auch diejenigen Farbwerte berechnet werden, die zu einer beliebigen anderen Zeit auf dem gleichen System erreicht werden. Dies läßt sich durch Interpolation mit benachbarten Stützpunkten aus Farbwerten, die zu einer bestimmten Zeit gemessen wurden, anhand des erweiterten Farbprofils erreichen. Bei dieser Interpolation werden die im erweiterten Farbprofil vorhandenen einzelnen Farbprofile zur Berechnung des gesuchten Farbwertes entsprechend der logarithmischen Abhängigkeit der Meßpunkte, also entsprechend Gleichung (1), gewichtet. Beispielsweise kann ein zu einer Zeit $T_x$ mit $T_7 < T_x < T_8$ zu erwartender Farbwert unter entsprechender Gewichtung der zu den Zeiten $T_7$ und $T_8$ gemessenen Farbwerte Lab ($T_7$) und Lab ($T_8$) ermittelt werden.

Ferner läßt sich das Alter eines Ausdrucks anhand des erweiterten Farbprofils bestimmen, indem durch Messung eines Farbprofils des Ausdrucks und Berechnung des zugehörigen Farbwertes Lab ($T_y$) die entsprechende, seit Fertigstellung des Ausdrucks vergangene Zeitspanne $T_y$ anhand des erweiterten Farbprofils (etwa durch Vergleich mit einem darin niedergelegten Farbwert zu einem anderen Zeitpunkt, z.B. $T_N$ oder dem Farbwert für t → ∞) ermittelt wird.

Außerdem kann bereits bei Erzeugung eines Ausdrucks dem Problem der zeitlichen Veränderung der Farbwerte Rechnung getragen werden, indem das Mischungsverhältnis bereits beim Ausdruck anhand des erweiterten Farbprofils so gewählt wird, daß nach Ablauf einer vorbestimmten Zeitspanne $T_z$ ein gewünschter Farbwert Lab ($T_z$) erhalten wird.

Ferner wird es möglich, Farbmessergebnisse von Ausdrucken auf verschiedenen Druckern miteinander zu vergleichen, und zwar unabhängig davon, wieviel Zeit zwischen dem Ausdruck und der Messung vergangen ist. Insbesondere können die Farbwerte verschiedener Drucker, die zu verschiedenen Zeiten nach dem Ausdruck gemessen wurden, auf eine gemeinsame Zeitbasis zurückgerechnet und so verglichen werden. Hierdurch ist es insbesondere möglich, zuverlässige Aussagen über das Druckverhalten mittels einer Online-Überwachung des Druckprozesses zu gewinnen.

**Patentansprüche**

1. Verfahren zum Betreiben einer Druckvorrichtung, mit den folgenden Schritten:

   • Ausdrucken eines Kalibrationsausdrucks mittels der Druckvorrichtung, wobei der Kalibrationsausdruck eine Mehrzahl von Meßfeldern mit jeweils unterschiedlichen Farbmischungsverhältnissen aufweist;
   • spektralphotometrisches Vermessen der Meßfelder unter Erzeugung eines Farbprofils aus den Meßergebnissen, wobei das spektralphotometrische Vermessen zu einer Mehrzahl (N) von Meßzeitpunkten ($T_n$) durchgeführt wird;
   • wobei das so genannte Farbprofil als ein erweitertes Farbprofil erzeugt wird, das eine Beschreibung des zeitlichen Verhaltens des Kalibrationsausdruckes beinhaltet;
   • wobei das erweiterte Farbprofil mehrere Farbprofile enthält, von denen jedes einem der Meßpunkte zugeordnet ist;
   • Einstellen von Farbmischungsverhältnissen der Druckvorrichtung auf Basis des erweiterten Farbprofils.

2. Verfahren nach Anspruch 1, wobei die Meßzeitpunkte der Mehrzahl (N) von Meßzeitpunkten ($T_n$) so gewählt werden, daß der Zeitabstand zwischen aufeinanderfolgenden Meßzeitpunkten mit dem zeitlichen Abstand zu dem Ausdrucken des Kalibrationsausdrucks zunimmt.

3. Verfahren nach Anspruch 2, wobei die Mehrzahl (N) von Meßzeitpunkten ($T_n$) so gewählt wird, daß der Zeitabstand zwischen aufeinanderfolgenden Meßzeitpunkten eine logarithmische Abhängigkeit von dem zeitlichen Abstand zu dem Ausdrucken des Kalibrationsausdrucks aufweist.

4. Verfahren nach Anspruch 3, wobei als logarithmische Abhängigkeit eine natürliche Logarithmusfunktion gewählt wird.

5. Verfahren nach einem der vorherigen Ansprüche, wobei das um eine Beschreibung des zeitlichen Verhaltens erweiterte Farbprofil die zu den einzelnen Meßzeitpunkten ($T_n$) erzeugten Farbprofile jeweils mit einem zeitlichen Index aufweist, der um so größer ist, je kürzer der zeitliche Abstand zu dem Ausdrucken des Kalibrationsausdrucks ist.

6. Verfahren nach einem der vorherigen Ansprüche, wobei vor dem Einstellen der Farbmischungsverhältnisse anhand der den einzelnen Meßzeitpunkten ($T_n$) zugeordneten Farbprofile des um eine Beschreibung des zeitlichen Verhaltens erweiterten Farbprofils weitere Farbprofile zu anderen als den tatsächlich gemessenen Zeitpunkten durch Extrapolation und/oder Interpolation bestimmt werden.

7. Verfahren nach einem der vorherigen Ansprüche, wobei Farbmischungsverhältnisse der Druckvorrichtung anhand des erweiterten Farbprofils so eingestellt werden, daß nach Ablauf einer bestimmten Zeitspanne vorbestimmte Farbwerte des Ausdrucks erhalten werden.

8. Verfahren nach einem der vorherigen Ansprüche, wobei durch Messung eines Farbprofils eines Ausdrucks und Berechnung des zugehörigen Farbwertes anhand des erweiterten Farbprofils das Alter des Ausdrucks bestimmt wird.

9. Verfahren nach einem der vorherigen Ansprüche, wobei als Druckvorrichtung ein Farbtintenstrahldrucker gewählt wird.

10. Druckvorrichtung, bei welcher Farbmischungsverhältnisse der Druckvorrichtung mittels eines Farbprofils einstellbar sind, wobei die Druckvorrichtung Mittel zum spektralphotometrischem Vermessen von Meßfeldern eines eine Mehrzahl von Meßfeldern mit unterschiedlichen Farbmischungsverhältnissen aufweisenden Kalibrationsausdruckes zum Erzeugen des Farbprofils aufweist,

- wobei die Mittel zum spektralphotometrischen Vermessen so ausgelegt sind, daß das spektralphotometrische Vermessen der Meßfelder zu einer Mehrzahl (N) von Meßzeitpunkten ($T_n$) unter Erzeugen eines um eine Beschreibung des zeitlichen Verhaltens erweiterten Farbprofils durchführbar ist, welches eine Mehrzahl von jeweils einem Meßzeitpunkt ($T_n$) zugeordneten Farbprofilen enthält; und
- wobei Farbmischungsverhältnisse der Druckvorrichtung auf Basis des um eine Beschreibung des zeitlichen Verhaltens erweiterten Farbprofils einstellbar sind.

11. Druckvorrichtung nach Anspruch 10, wobei die Mittel zum spektralphotometrischen Vermessen so ausgelegt sind, daß der Zeitabstand zwischen aufeinanderfolgenden Meßzeitpunkten mit dem zeitlichen Abstand zu dem Ausdrukken des Kalibrationsausdrucks zunimmt.

12. Druckvorrichtung nach Anspruch 11, wobei die Mittel zum spektralphotometrischen Vermessen so ausgelegt sind, daß der Zeitabstand zwischen aufeinanderfolgenden Meßzeitpunkten eine logarithmische Abhängigkeit von dem zeitlichen Abstand zu dem Ausdrucken des Kalibrationsausdrucks aufweist.

13. Druckvorrichtung nach Anspruch 12, wobei die logarithmische Abhängigkeit durch eine natürliche Logarithmusfunktion beschrieben ist.

14. Druckvorrichtung nach einem der Ansprüche 10 bis 13, wobei die Druckvorrichtung ein Farbtintenstrahldrucker ist.

**Claims**

1. Method for operating a printing device, comprising the following steps:

· printing out a calibration printout by means of the printing device, wherein the calibration printout comprises a plurality of measurement fields in each case with different colour mixing ratios;
· spectralphotometrically measuring the measurement fields while producing a colour profile from the measurement results, wherein the spectralphotometric measurement is carried out at a plurality (N) of measurement instants $(T_n)$;
· wherein the so-called colour profile is produced as an extended colour profile which includes a description of the time behaviour of the calibration printout;
· wherein the extended colour profile contains a plurality of colour profiles, each of which is associated with one of the measurement points;
· setting colour mixing ratios of the printing device on the basis of the extended colour profile.

2. Method according to Claim 1, wherein the measurement instants of the plurality (N) of measurement instants $(T_n)$ are selected so that the time interval between consecutive measurement instants increases with the time interval relative to printing out the calibration printout.

3. Method according to Claim 2, wherein the plurality (N) of measurement instants $(T_n)$ are selected so that the time interval between consecutive measurement instants has a logarithmic dependency on the time interval relative to printing out the calibration printout.

4. Method according to Claim 3, wherein a natural logarithm function is selected as the logarithmic dependency.

5. Method according to any one of the preceding Claims, wherein the colour profile, which is extended by a description of the time behaviour, comprises the colour profiles produced at the individual measurement instants $(T_n)$ in each case with a time index which increases as the time interval relative to printing out the calibration printout decreases.

6. Method according to any one of the preceding Claims, wherein, before setting the colour mixing ratios on the basis of the colour profiles, associated with the individual measurement instants $(T_n)$, of the colour profile extended by a description of the time behaviour, further colour profiles are determined at instants other than those actually measured through extrapolation and/or interpolation.

7. Method according to any one of the preceding Claims, wherein colour mixing ratios of the printing device are set on the basis of the extended colour profile so that predetermined colour values of the printout are obtained after the expiry of a certain period.

8. Method according to any one of the preceding Claims, wherein the age of the printout is determined by measuring a colour profile of a printout and calculating the associated colour value on the basis of the extended colour profile.

9. Method according to any one of the preceding Claims, wherein a colour inkjet printer is selected as the printing device.

10. Printing device, in which
colour mixing ratios of the printing device can be set by means of a colour profile, wherein the printing device comprises means for spectralphotometrically measuring measurement fields of a calibration printout comprising a plurality of measurement fields with different colour mixing ratios for producing the colour profile,

.wherein the means for the spectralphotometric measurement are designed so that the spectralphotometric measurement of the measurement fields can be carried out at a plurality (N) of measurement instants $(T_n)$ while producing a colour profile which is extended by a description of the time behaviour and which contains a plurality of colour profiles, each of which is associated with a measurement instant $(T_n)$; and
.wherein colour mixing ratios of the printing device can be set on the basis of the colour profile extended by a description of the time behaviour.

11. Printing device according to Claim 10, wherein the means for the spectralphotometric measurement are designed so that the time interval between consecutive measurement instants increases with the time interval relative to printing out the calibration printout.

12. Printing device according to Claim 11, wherein the means for the spectralphotometric measurement are designed so that the time interval between consecutive measurement instants has a logarithmic dependency on the time interval relative to printing out the calibration printout.

13. Printing device according to Claim 12, wherein the logarithmic dependency is described by a natural logarithm function.

14. Printing device according to any one of Claims 10 to 13, wherein the printing device is a colour inkjet printer.

**Revendications**

1. Procédé d'exploitation d'un dispositif d'impression, comprenant les étapes suivantes :

- l'impression d'un tirage de calibrage au moyen du dispositif d'impression, le tirage de calibrage comprenant une multitude de champs de mesure ayant chacun différents rapports de mélange de couleurs ;
- la mesure spectrophotométrique des champs de mesure en créant un profil de couleurs à partir des résultats de mesure, la mesure spectrophotométrique étant effectuée à une multitude (N) d'instants de mesure ($T_n$) ;
- le profil dit profil de couleurs étant produit sous forme d'un profil de couleurs étendu, qui contient une description de l'évolution dans le temps du tirage de calibrage ;
- le profil de couleurs étendu contenant plusieurs profils de couleurs, dont chacun est associé à l'un des instants de mesure ;
- le réglage des rapports de mélange de couleurs du dispositif d'impression sur la base du profil de couleurs étendu.

2. Procédé selon la revendication 1, dans lequel les instants de mesure de la multitude (N) d'instants de mesure ($T_n$) sont choisis de manière telle que l'intervalle de temps entre des instants de mesure successifs augmente avec le temps écoulé depuis l'impression du tirage de calibrage.

3. Procédé selon la revendication 2, dans lequel la multitude (N) d'instants de mesure ($T_n$) est choisie de manière telle, que l'intervalle de temps entre des instants de mesure successifs présente une dépendance logarithmique du temps écoulé depuis l'impression du tirage de calibrage.

**4.** Procédé selon la revendication 3, dans lequel la dépendance logarithmique est choisie comme une fonction de logarithme naturel.

**5.** Procédé selon l'une quelconque des revendications précédentes, dans lequel le profil de couleurs étendu complété par une description de l'évolution dans le temps comprend les profils de couleurs produits aux différents instants de mesure ($T_n$) pourvus chacun d'un indice du temps, qui est d'autant plus grand, que l'intervalle de temps par rapport à l'impression du tirage de calibrage est court.

**6.** Procédé selon l'une quelconque des revendications précédentes, dans lequel, avant de régler les rapports de mélange de couleurs à l'aide des profils de couleurs associés aux différents instants de mesure ($T_n$) du profil de couleurs étendu complété d'une description de l'évolution dans le temps, d'autres profils de couleurs sont déterminés, par extrapolation et/ou par interpolation, pour d'autres instants que les instants effectivement mesurés.

**7.** Procédé selon l'une quelconque des revendications précédentes, dans lequel des rapports de mélange de couleurs du dispositif d'impression sont réglés à l'aide du profil de couleurs étendu d'une manière telle, qu'après écoulement d'une certaine période de temps, des valeurs chromatiques prédéfinies du tirage sont obtenues.

**8.** Procédé selon l'une quelconque des revendications précédentes, dans lequel l'âge d'un tirage est déterminé à l'aide d'une mesure d'un profil de couleurs d'un tirage, et d'un calcul de la valeur chromatique correspondante à l'aide du profil de couleurs étendu.

**9.** Procédé selon l'une quelconque des revendications précédentes, dans lequel on choisit, comme dispositif d'impression, une imprimante à jet d'encre de couleur.

**10.** Dispositif d'impression, dans lequel des rapports de mélange de couleurs du dispositif d'impression sont réglables à l'aide d'un profil de couleurs, le dispositif d'impression comprenant des moyens de mesure spectrophotométrique de champs de mesure d'un tirage de calibrage présentant une multitude de champs de mesure ayant différents rapports de mélange de couleurs, dans le but de produire ledit profil de couleurs,

- les moyens de mesure spectrophotométrique étant configurés de manière telle que la mesure spectrophotométrique des champs de mesure est réalisable à une multitude (N) d'instants de mesure ($T_n$), en générant un profil de couleurs étendu incorporant une description de l'évolution dans le temps, qui contient une multitude de profils de couleurs respectivement associés à un instant de mesure ($T_n$) ; et
- des rapports de mélange de couleurs du dispositif d'impression sont réglables sur la base du profil de couleurs étendu incorporant une description de l'évolution dans le temps.

**11.** Dispositif d'impression selon la revendication 10, dans lequel les moyens de mesure spectrophotométrique sont configurés de manière telle, que l'intervalle de temps entre des instants de mesure successifs augmente avec le temps écoulé depuis l'impression du tirage de calibrage.

**12.** Dispositif d'impression selon la revendication 11, dans lequel les moyens de mesure spectrophotométrique sont configurés de manière telle, que l'intervalle de temps entre des instants de mesure successifs présente une dépendance logarithmique du temps écoulé depuis l'impression du tirage de calibrage.

**13.** Dispositif d'impression selon la revendication 12, dans lequel la dépendance logarithmique est décrite par une fonction de logarithme naturel.

**14.** Dispositif d'impression selon l'une quelconque des revendications 10 à 13, dans lequel le dispositif d'impression est une imprimante à jet d'encre de couleur.

Fig. 1a)

| Messung n | 1 | 2 | 3 | 4 | 5 | 6 | 7 | 8 | 9 | 10 |
|---|---|---|---|---|---|---|---|---|---|---|
| —◆— Minuten | 15 | 40,7742 | 110,836 | 301,283 | 818,972 | 2226,2 | 6051,43 | 16449,5 | 44714,4 | 121546 |
| —■— Stunden | 0,25 | 0,67957 | 1,84726 | 5,02138 | 13,6495 | 37,1033 | 100,857 | 274,158 | 745,239 | 2025,77 |
| —▲— Tage | 0,01042 | 0,02832 | 0,07697 | 0,20922 | 0,56873 | 1,54597 | 4,20238 | 11,4233 | 31,0516 | 84,4071 |
| —✗— Wochen | 0,00149 | 0,00405 | 0,011 | 0,02989 | 0,08125 | 0,22085 | 0,60034 | 1,63189 | 4,43595 | 12,0582 |

Fig. 1b)

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1178670 A
- EP 0398502 A
- EP 0854638 A
- EP 398502 A